Europäisches Patentamt

**(19)** European Patent Office

Office européen des brevets

**(11)** Publication number : **0 521 853 B1**

## **(12)** EUROPEAN PATENT SPECIFICATION

**(45)** Date of publication of patent specification :
**19.04.95 Bulletin 95/16**

**(51)** Int. Cl.$^6$ : **G01M 7/00**

**(21)** Application number : **90914573.2**

**(22)** Date of filing : **21.05.90**

**(86)** International application number :
**PCT/US90/02761**

**(87)** International publication number :
**WO 91/18271 28.11.91 Gazette 91/27**

**(54)** ADAPTIVE CONTROL METHOD FOR MULTIEXCITER SINE TESTS.

**(43)** Date of publication of application :
**13.01.93 Bulletin 93/02**

**(45)** Publication of the grant of the patent :
**19.04.95 Bulletin 95/16**

**(84)** Designated Contracting States :
**AT BE CH DE DK ES FR GB IT LI LU NL SE**

**(56)** References cited :
EP-A- 0 124 136
US-A- 3 710 082
US-A- 3 974 364
US-A- 4 061 017
US-A- 4 181 029
PATENT ABSTRACTS OF JAPAN vol. 10, no.
278 (P-499)(2334) 20 September 1986 &
JP-A-61099835

**(56)** References cited :
PATENT ABSTRACTS OF JAPAN vol. 8, no.
215 (P-305)(1652) 2 October 1984 & JP-
A-59100918
H.-P.Greiner and W.Kraft
"Betriebsfestigkeitsprüfung der
Gesamtkarosserie auf einer rechnergesteuer-
ten 12-Kanal-Prüfanlage", pages 87-105 from
the book VDI Berichte 632 "Mess- und Ver-
suchstechnik im Automobilbau", VDI Verlag
Düsseldorf (DE) 1987

**(73)** Proprietor : **UNDERWOOD, Marcos A.**
**21850 Byrne Court**
**Cupertino, CA 95014 (US)**

**(72)** Inventor : **UNDERWOOD, Marcos A.**
**21850 Byrne Court**
**Cupertino, CA 95014 (US)**

**(74)** Representative : **Rackette, Karl, Dipl.-Phys.**
**Dr.-Ing**
**Postfach 1310**
**D-79013 Freiburg (DE)**

## Description

### TECHNICAL FIELD

The present invention relates generally to a method and corresponding system for correcting for nonlinearity in system characteristics during a vibration test, and more particularly to a method for accurately controlling stimuli applied by a multiexciter swept-sinewave control system so as to keep a resultant response matrix within acceptable limits. The predominant current usage of the adaptive control method for multiexciter swept sine tests of the present invention is in controlling the forces applied in the process of vibration stress analysis of engineered articles of manufacture.

### BACKGROUND ART

Numerous factors have combined to create a need for increasingly accurate and repeatable stress and vibration testing of structures and devices. Among these are the trend to build things lighter and stronger, the increasing usage of new and untested materials, and an increasing awareness of the need for predictability and safety in the design and manufacture of products. Therefore, the field of vibration testing is rapidly advancing. Vibration testing is performed on actual items of manufacture where size and economy permit. Where this is not feasible, vibration testing may be performed on scale models or mock ups of items thought to have the same relative resistance to vibration as the actual items of interest.

In the paper of H.-P. Greiner and W. Kraft "Betriebsfestigkeitsprüfung der Gesamtkarosserie auf einer rechnergesteuerten 12-Kanal-Prüfanlage", pages 87 to 105 from the book VDI Berichte 632 "Meß- und Versuchstechnik im Automobilbau", VDI Verlag Düsseldorf (DE) 1987 there is known a method and a system for stimulating wheel suspensions of an automobile with forces simulating actual operating conditions. In this paper it is described that response values received from sensors attached to the wheel suspensions are compared with previously memorized reference values obtained during a test run of the automobile to be investigated. On page 89 it is described that using an ITFC-system (Iterativ Transfer Function Compensation system) and comparing the response values with the reference values a rather accurate reproduction of the stress conditions occurring in a realistic operation mode is achieved.

Applying bandpass filtering techniques in the frequency range between 0.8 Hertz and 30 Hertz to a transfer function matrix as well as its inverse the iteration is converging due to damping or even truncating secondary diagonal elements of these matrices. These secondary diagonal elements correspond to cross coupling effects which are very sensitive to small errors in the high frequency and low frequency domain. Therefore, damping or truncating these elements leads to stable converging iteration in the simulation of actual operating conditions. Though this technique is shown to be reliable even in simulating conditions with strong forces acting in two directions, this simulation shows some deviation from actual operating features in the frequency range which is affected by the action of the bandpass filters. In overwriting the matrices after comparing the reference values with response signals occurring after excitation with a specific set of drive signals a stable iteration in the frequency range within the transfer range of the bandpass filters is well achieved. However, there are significant deviations for example in the low frequency range where friction effects are occurring which cannot be taken into account in a precise manner.

U.S. Patent Nos. 3,710,082, and 3,848,115, both issued to Sloane et al., are concerned with the process of controlling essentially random signals with the objective of maintaining an overall spectral density of a vibration pattern within acceptable limits. Such an approach recognizes the random nature of many naturally occurring vibration sources. While this conceptual approach is perfectly valid and correct, it has been recognized that a more precisely defined stimulus might lead to a higher degree of repeatability in testing. One approach that has been tried is to use motive stimulus defined by sine waves. Any complex wave can be synthesized using a combination of sine waves. Therefore, a multiexciter system with each exciter being driven by precisely controlled sums of sine waves could, theoretically, produce any desired complex vibration pattern in a structure. In a multiexciter system, stimulus, and response are best described by vectors of dimension N and impedance factors are best described by a matrix of N by N dimensions, with N being the number of stimulus/response points involved.

The objective of a multiexciter swept-sinewave test is to impart a controlled stimulus to a structure at specified points via a series of actuators. A desired stimulus can be represented as a complex vector spectrum. A multiexciter controller, through feedback, continuously excites the structure, measures the response spectral vector at the control points, and modifies the drive signal spectral vector until the response vector agrees with the desired stimulus vector to within some acceptable error tolerance.

In the past, these tests have been performed using purely analog means. In the analog systems, phase relationships between response points were controlled by inducing phase shifts between the drive signal components as a function of the phase difference between the response points. However, the analog approach proved to be largely unsuccessful at frequencies near structural resonance frequencies, since cross coupling effects between the drive signal components and the structure's frequency response characteristics were not accounted for.

More recently, digital approaches have been tried with greater success. The most important reason for the success of digital control systems in these applications is that digital systems can employ a feedback control algorithm that accounts for structural cross coupling effects by using a structural frequency response matrix measured before the test. U.S. Patent No. 4,782,324, issued to the present inventor, teaches a method and apparatus for converting a digital signal into an analog signal useful for vibration exciter stimulation.

However, even the currently available digital control systems will not provide the desired degree of control when applied to nonlinear and/or time varying systems because the frequency response matrix estimate used by the control system may differ from the actual frequency response matrix existing during the test. For instance, nonlinear stiffness effects will generally cause a shift in the resonant frequency that will cause a large deviation in the phase of the measured frequency response matrix as compared to the response matrix which the control system actually encounters as it is conducting the swept sine test. These potentially large phase discrepancies can cause control system instabilities. Further, imperfections in controller drive and response circuits can lead to undetected inaccuracies in conventional systems. Clearly, there is a need to be able to dynamically compensate for nonlinear and time variant deviations in a structure response matrix during vibration testing, and to detect and correct for other system inaccuracies.

All of the prior art systems for digitally controlling multiexciter swept-sinewave vibration testing within the inventor's knowledge have employed a predetermined and set structural frequency response matrix.

No prior art controller to the inventor's knowledge has successfully compensated for non linear or time variant factors in a system frequency response matrix. All multiexciter swept-sinewave vibration test controllers to date have suffered a high degree of inaccuracy or instability when encountering such variable factors, especially near structural resonance frequencies.

## DISCLOSURE OF INVENTION

Accordingly, it is an object of the present invention to provide a controller for multiexciter swept-sinewave vibration testing which will produce a desired complex stimulus vector spectrum at a full range of frequencies including those near structural resonance.

It is another object of the present invention to provide a controller for multiexciter swept-sinewave vibration testing which will correct for instrumentation errors, such as low matching of phase and amplitude between driver input channels, low coherence between exciter drive vector and control point response vector, and low dynamic range of the input and output channels.

It is still another object of the present invention to provide a means for dynamically adjusting a drive signal spectral vector in a multiexciter swept-sinewave vibration test to compensate for non linear and time variant characteristics of the structure under test.

It is yet another object of the present invention to provide a means to correct for factors in a multiexciter swept-sinewave test control system which would tend to cause a drive signal spectral vector to vary from a desired stimulus spectral vector.

Briefly, the preferred embodiment of the present invention is a digitally controlled multiexciter swept-sinewave vibration test controller employing the inventive method to refine an estimate of system impedance values during the control process for causing a control point response spectral vector to agree with a desired reference spectral vector. As with previous swept-sinewave controllers, the inventive controller functions by employing a feedback control algorithm that accounts for structural cross coupling effects in a structure under test by using a structural frequency response matrix. However, the controller of the present invention has the capability of adjusting the structural frequency response matrix during testing and then modifying drive signals accordingly.

System stability is insured by application of an optimization process to the adaptive control process.

An advantage of the present invention is that test reliability and repeatability are enhanced by improved control of vibration stimuli.

A further advantage of the present invention is that test integrity is maintained even at structural resonance and anti-resonance frequencies of a structure under test.

Yet another advantage of the present invention is that unacceptable instability is not introduced into a test by time variant or nonlinear characteristics of a structure under test.

Still another advantage of the present invention is that inaccuracies and instability due to instrumentation errors in a controller feedback system are effectively reduced.

These and other objects and advantages of the present invention will become clear to those skilled in the art in view of the description of the best presently known modes of carrying out the invention and the industrial applicability of the preferred embodiments as described herein and as illustrated in the several figures of the drawing.

## BRIEF DESCRIPTION OF THE DRAWING

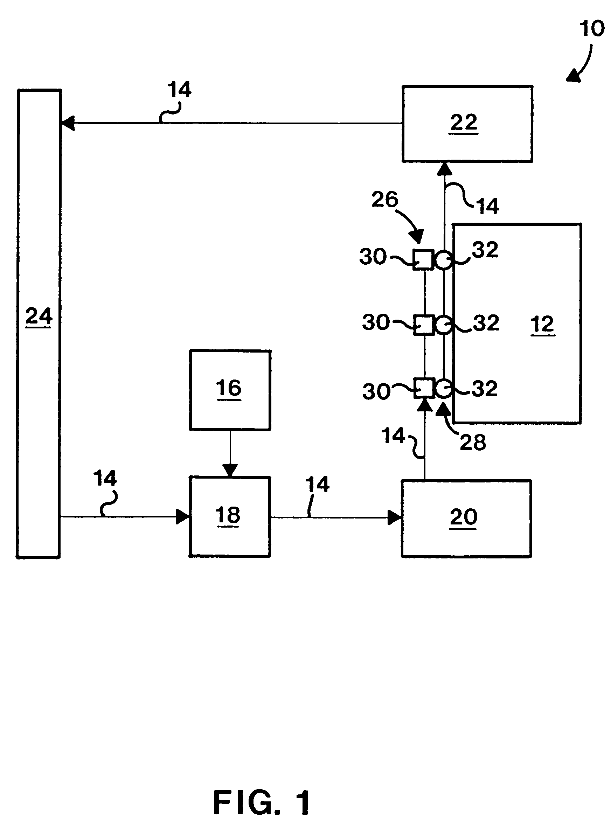

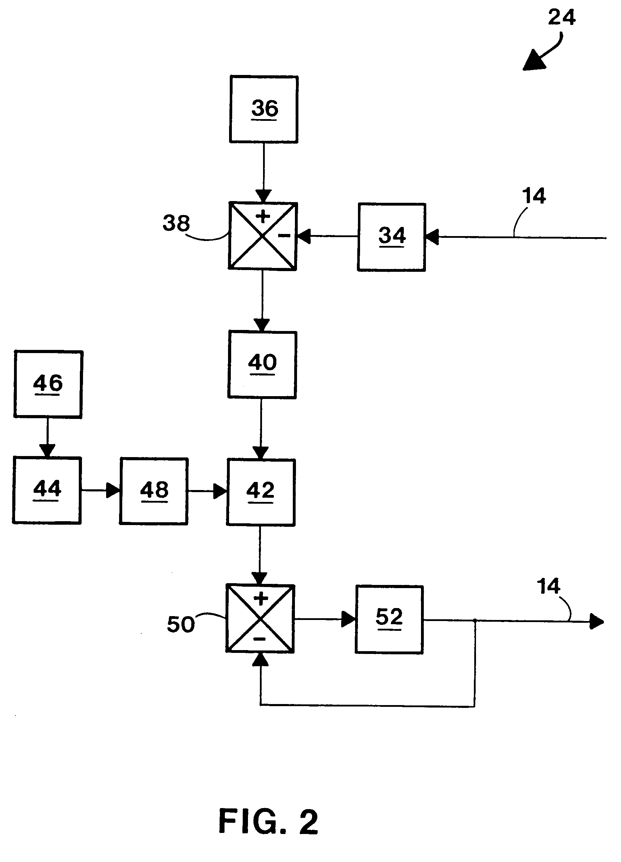

FIG. 1 is a block-diagram of a swept-sinewave controller employing the inventive method: and FIG. 2 is a flow diagram showing digital signal processing steps to implement the inventive method within a digital signal processing system.

## BEST MODE FOR CARRYING OUT INVENTION

The best presently known mode for carrying out the invention is a multiexciter swept-sinewave vibration controller suitable for implementing the inventive adaptive control method. The predominant expected usage of the inventive adaptive control method is in the design experimentation and quality control phases of the production of structural items and components of items which are intended to withstand vibration forces. The inventive method is particularly useful in the testing of relatively large or complex structures which are capable of complex resonance or of physical characteristics that vary with time, with frequency, or with other test parameters.

The controller of the presently preferred embodiment of the present invention is illustrated by means of a block diagram in FIG. 1 and is designated therein by the general reference character 10. Also shown in FIG. 1 is a system under test 12 which, along with the controller 10 form portions of a closed control loop 14. In many of its substantial components and Drocesses, the controller 10 does not differ significantly from conventional multiexciter swept-sinewave controllers. The physical structure is similar to that of prior art controllers.

The conventional elements of the controller 10 include a digital sweep oscillator 16, a digital vector swept oscillator 18, a D/A subsystem 20, an A/D subsystem 22 and a digital processing subsystem 24. Completing the closed control loop 14 are an exciter array 26 and a sensor array 28. The exciter array 26 is made up of a quantity of exciters 30 chosen by a user of the controller 10 to be the most desirable for the system under test 12. The locations of the exciters 30 on the system under test 12 are also chosen by the user according to established principles which form no part of the present invention. For illustrative purposes, the control loop 14 is shown in FIG. 1 to include three exciters 30. In this example of a configuration for usage of the best presently known embodiment 10 of the inventive controller, the sensor array 28 contains a quantity of sensors 32 equal to the quantity of exciters 30, being three in the present example. However, as will be discussed hereinafter, the present invention may also be used with "non-square" systems in which the quantities of exciters 30 and sensors 32 are not identical. The sensors 32 are placed as close as possible to the exciters 30 so as to avoid, as much as possible, error in the feedback loop 14 resulting from dissimilarity between motion actually present at the exciters 30 and that sensed at the sensors 32.

During testing, the digital vector swept oscillator 18 modifies a digital equivalent of a sine wave signal created in the digital sweep oscillator 16 according to input derived from the digital processing system 24. The D/A subsystem converts the modified digital equivalent signal into an analog signal suitable for driving the exciters 30. The exciters 30 may be any of the commonly available linear or rotary types of electromechanical exciter devices. The present inventor's Patent No. 4,782,324 teaches a method and apparatus for converting a digital signal into a band limited analog signal which is used in the inventive controller 10. When the exciters 30 have stimulated the system under test 12, the sensors 32 measure the resultant response. If there were but one exciter 30 and one sensor 32, a response measured at that one sensor 32 could rightly be considered to be the effect of the stimulus imparted by the one exciter 30. However, since in the present example three exciters 30 and three sensors 30 are used, responses measured at the sensors 32 must be considered to be an N dimensional vector, with N being the total number of exciter 30 and sensor 32 pairs. Analog response signals created by the sensors 32 are converted to digital equivalents by the A/D subsystem 22, which digital input is provided to the digital processing system 24.

Referring now to FIG. 2, wherein is shown a block flow diagram of the digital signal processing flow which occurs within the digital processing system 24, it can be seen that the outputs of the A/D subsystem 22 are provided to the digital processing system via the feed-back loop 14 and are resolved into a control response vector 34. It should here be noted that the enumerated features of FIG. 2 represent analog equivalents of the digital manipulation that actually occurs within the digital processing system 24. The notation is customary for depicting analog equivalents of digital signal processing steps. As one familiar with the art of digital signal processing would appreciate, actual mathematical functions may be performed in an order not directly correlative to the analog equivalents depicted. Transformation of the analog equivalent shown into the digital signal processing actually performed is according to well known practices and is not unique to the present invention. The control response vector 34 is compared to a reference spectrum vector 36 at a first comparator 38. A control error vector 40 results from the first comparator 38. Individual values of the control error vector 40 will be positive where corresponding reference spectrum vector 36 values are higher than control response vector 34 values, and negative where reference spectrum vector 36 values are lower than control response vector 34 values. A compensated error matrix 42 is produced by adjusting the control error vector 40 according to a system impedance matrix **44**. The system impedance matrix **44** is the set of inverse values of values contained in a system response matrix **46**. Initial values for the system response matrix **46** are determined prior to beginning a test by stimulating the system under test **12** sequentially with individual exciters **30** and measuring the response of the system **12** at each sensor **32**. An adjustment gain scalar **48** is the factor by which the control error vector **40** is adjusted by the system impedance matrix **44**. Means for adjusting the control error vector **40** by the system impedance matrix 44 are well known and practiced in the art, and are not unique to the present invention.

The compensated error matrix **42** is provided to a second comparator **50**. The second comparator **50** produces an updated drive signal **52** which is provided as an output to the feedback loop **14**. It is important to note that the operation described above is both cyclical and continuous in nature, and that the updated drive signal vector **52** being instantaneously provided to the feedback loop **14** is also provided as an input to the second comparator **50** such that each succeeding cycle has as one component of the updated drive signal vector **52** the updated drive signal vector **52** of the previous cycle.

In mathematical terms the above described functioning of the digital processing system **24** can be described as follows:

$$\{D_{n+1}(f)\} = \{D_n(f)\} + g[Z_m(f)]\ \{R(f)\} - \{C_n(f)\}\}$$

where;

$D_n(f) \equiv$ current values of the updated drive signal **52**;

$D_{n+1}(f)\} \equiv$ next subsequent values of the updated drive signal **52**;

$g \equiv$ value of the adjustment gain scalar **48**;

$Z_m(f) \equiv$ values of the system impedance matrix estimate **44**;

$R(f) \equiv$ values of the reference spectrum vector **36**;

$C_n(f) \equiv$ values of the control response vector **34**; and where the subscript "n" represents the number of the current repetition and the subscript "m" represents the fact that the associated quantities are measured and determined prior to beginning the first test cycle.

It has been the practice in the industry to determine the value of the adjustment gain scalar **48** at the outset of the test to be a value "g" which is sufficiently large to result in a reasonably quick system convergence, while remaining small enough to reduce potential instability problems caused by repeated excessive over correction of the compensated error matrix **42** and, thus, of the updated drive signal vector **52**. Note that negative values of "g" have to be used when phase errors greater than 90° are present in measured values of the system response matrix **46**. Further, the values of the system response matrix **46**

have also heretofore been fixed during the test at values set prior to the beginning of the test, as explained previously herein.

However, as is also explained previously herein, while the digital processing system **24**, as defined thus far, will attempt to cause the control response vector **34** to converge on the reference vector **36** values, it implicitly uses assumptions that the system impedance matrix **44** is an accurate measure of actual system characteristics under dynamic test conditions. As discussed previously, this may not be a good assumption, particularly over time as overall system conditions, such as frequency and magnitude of input stimuli, vary.

Therefore, in accordance with the method of the present invention, a series of system response matrices **46** is produced which converge to the inverse of an "actual" system frequency response matrix "H(f)" (not shown). As will be discussed hereinafter, an "actual" system response matrix, because it may continually vary and because it is not amenable to precise measurement, cannot be precisely defined, and trying to define it is best viewed as a goal that can never quite be achieved. Further, the presently preferred embodiment of the present invention employs a variable complex value for the adjustment gain scalar **48** which can compensate for phase errors that can exist in updated system response matrices **46** during early stages of the update process, instead of the fixed value "g". The difficulty in the process arises from the fact that any obvious approaches to this require that the indefinable "actual" system response matrix be known. The inventor has applied aspects of optimization theory with aspects of control problem theory and an application of an algorithm that attempts to minimize an objective function to derive the unique process described herein which provides a means for accomplishing this seemingly impossible control dilemma.

According to the method of the present invention, the system impedance matrix **44** is updated according to the formula:

$$[Z_{n+1}(f)] = ([I_N] +$$

$$\frac{(\{S_n(f)\} - [Z_n(f)](\{C_{n+1}(f)\} - \{C_n(f)\})\}\{S_n(f)\} *}{<[Z_n(f)](\{C_{n+1}(f)\} - \{C_n(f)\}),\{S_n(f)\}>})[Z_n(f)]$$

where:

$S_n(f) \equiv$ values of the compensated error vector **40**;

$Z_n(f) \equiv$ values of the system impedance matrix **44**;

$C_{n+1}(f)\} \equiv$ next subsequent values of the control response vector **34**;

$C_n(f) \equiv$ present values of the control response vector **34**;

$Z_n(f) \equiv$ present values of the system impedance matrix **44**;

$Z_{n+1}(f) \equiv$ next subsequent values of the system

impedance matrix **44**;

$I_N \equiv$ the N dimensional identity matrix with N being the number of exciters **30** and sensors **32** in use.

It should be noted that, in accordance with the usage of the present invention, values of the compensated error vector **40** may properly also alternately be referred to as a vector "step" magnitude and direction because:

$$\{S_n(f)\} = a_n[Z_n(f)](\{R(f)\} - \{C_n(f)\}) = \{D_{n+1}(f)\} - \{D_n(f)\}$$

where;

$a_n \equiv$ present value of the adjustment gain scalar **48**.

In other words, the compensated error vector **40** is the amount by which values of the drive signal vector **52** are "stepped" between each cycle.

Values of the (variable) adjustment gain scalar **48** are determined by using a variation of a classic steepest decent approach according to a formula and method described hereinafter The resulting value $a_n$ is a steepest decent complex gain value for the adjustment gain scalar **48**. Application of this method results in a change in control error matrix **42** values between two successive control loop iterations which are strictly non-negative. This means that control error matrix **42** values will decrease even for arbitrary invertible values of the system impedance matrix **44**. This helps to assure that the controller **10** will be stable. The use of a complex number for $a_n$ is a refinement of the previously mentioned technique of using negative values of gain where phase deviation between values of the system response matrix **46** exceeds 90°.

Furthermore, the vectors $\{S_n(f)\} = a_n[Z_n(f)](\{R(f)\} -\{Cn(f)\})$ can be shown to be conjugate, since they are the outcome of a steepest descent approximate Hessian algorithm. Also, the impedance update, $[Z_{n+1}(f)]$ satisfies the secant equation:

$$[Z_{n+1}(f)](\{C_{n+1}(f)\} - \{C_n(f)\}) = \{S_n(f)\}$$

These two conditions guarantee (hypothetically) that the system impedance matrix **44** will converge to the "actual" impedance matrix within N steps, where N is the number of independent exciters **30** that are being used to conduct the test, if the underlying system being controlled is both linear and time invariant.

The above described steps result in a method for estimating the impedance of the system **12** during the control process. The process is essentially stable and, converges in at most N iterations for linear and time invariant systems **12**. In the event the system under test **12** is nonlinear or time variant, the method will track the impedance of the system **12** as it varies with drive and control response amplitudes and frequencies. Obviously, the controller **10** will not converge exactly in a finite number of steps.

The one remaining unresolved problem in the basic scheme is that values of the complex quantity $a_n$ depend upon an unknown which is, generally, just as unknown as the "actual" system response matrix [H(f)]. To solve this dilemma, the inventor has employed a "two step control loop" wherein a "learning" loop is used to determine a value which is then used to calculate $a_n$, which is then used in a "control" loop. The "control" loop uses $a_n$ to correct as much of any remaining error as is possible. The result of the "control" loop is then used to update impedance estimates followed by yet another "learning" loop. The cycle is repeated until the system **12** is brought under control.

To accomplish the "two step control loop" process, a variation of the classical multiexciter control update discussed previously is used:

$$\{\hat{D}_n(f)\} = \{D_n(f)\} + c_n[Z_n(f)](\{R(f)\} - \{C_n(f)\})$$

where;

$\{\hat{D}_n(f)\} \equiv$ values of the drive signal vector **52** for the "learning" loop; and

$C_n \equiv$ value of the adjustment gain scalar **48** for the "learning" loop.

In the presently preferred embodiment of the invention, an initial value of approximately .1 is chosen for $c_n$ in order to minimize control errors associated with using a possibly erroneous impedance estimate in the system impedance matrix **44**. Values of $c_n$ are allowed to increase as confidence in the accuracy of values within the system impedance matrix **44** is increased. Following the "learning" loop, the system under test **12** will respond with a "feed-back" loop response value of the control response vector **34**:

$$\{\hat{C}_n(f)\}$$

From this, a value for the variable adjustment gain scalar **48** can be calculated as follows:

$$a_n = \frac{c_n < (\{R(f) - \{C_n(f)\}), (\{\hat{C}_n(f)\} - \{C_n(f)\}) >}{||\{\hat{C}_n(f)\} - \{C_n(f)\})||^2}$$

As confidence in the values of the variable system impedance matrix **44** increases, as measured by the value of $a_n$, the value of $c_n$ is allowed to approach 1.0. It should be noted that an additional benefit can be derived from monitoring the value of $a_n$. Since, as previously discussed, values of the "actual" system response [H(f)] cannot be known exactly, it is useful to note that the value of $a_n$ is the best indicator of the instant reliability of the current working values of the system response matrix $[Z_n(f)]$ **46**.

The results described herein are relatively independent of the initial value chosen for $c_n$ and the rate at which it is allowed to approach 1.0. However, obviously too small a value for $c_n$ will cause ill-conditioning of the an calculation, and too large a $c_n$ makes the controller **10** too sensitive to system nonlinearities. Therefore, care in choosing these values must still be exercised, and only some minor experimentation with each different system will suffice to try to optimize these values.

As described herein, a process for obtaining and using all necessary values to achieve the described objectives can be achieved by the interdependent steps of the inventive process. All of the quantities required are available during either the "learning" loop or the "control" loop. Use of the inventive method does potentially increase control error during initial iterations due to potential errors in initial values assigned to the system response matrix **44**. Careful selection of values for $c_n$ minimizes this problem.

Remaining problems to be addressed concerning the present invention relate to sources of inaccuracy that are inherent in any similar multiexciter sine wave type system. Following is a discussion of how these problems are dealt with in accordance with the best presently known embodiment of the present invention.

The first such problem is low coherence between the drive vector matrix **50** and the control point response vector **34**. This low coherence results from noise in the measurement of the control response vector **34** which is independent of signals resulting from the drive vector **52**. This sort of error is corrected in the best presently known embodiment of the present invention by employing a a numeric algorithm to synthesize a tracking filter in the digital domain in order to measure the response at the fundamental frequency of the drive signal. Algorithms for synthesizing analog filter equivalents are well known and widely practiced in the industry. This limits the effects of the contaminating noise by reducing the bandwidth of the noise to match the bandwidth of the tracking filter. Results of multiple complex amplitude measurements are also averaged over several repetitions to reduce the effects even further. However, remaining noise still has an effect, and the greatest effect will result near convergence of the system impedance matrix **44** to the "actual" system impedance.

A second such problem to be addressed is the effect of poor matching between the several electrical channels leading from the sensors **32**. The mismatch is a result mainly of differences between characteristics of low-pass filters that are used ahead of the A/D converter channels in the A/D subsystem **22** to prevent aliasing errors. The inventor has found that this problem can be corrected by the same means used with more conventional means of measuring frequency response matrices. One solution is to use very high quality components so as to match characteristics of all channels to some acceptable level, such as ± .1 dB in amplitude and ± 1.0 degree in phase. Another workable solution is to use a software based calibration procedure, such as measuring the frequency characteristics of the input subsystem and correcting the input signal estimates thereby. Both methods have been successfully employed with the present invention. The best presently preferred embodiment uses the method of employing high quality components. While this method is the more costly, it has proven to be preferable.

A third such universal problem is that of low input and output dynamic range. This causes noise to appear on both the input vector **34** and on signals resulting from the output vector **52**. These problems are caused by finite resolutions of the A/D subsystem **22** and D/A subsystem **20**, or by low efficiency transducers being used as exciters **30** or sensors **32**. The problem is aggravated by the fact that significant levels of signal component are produced at frequencies other than the excitation frequency. Presence of these additional signal components results in fundamental frequency response being described by a small digital value in the A/D subsystem **20**. The result is a larger percentage error in the control response vector **34**. The best solution to minimize this problem has been found to be the use of high-resolution components such as 16 bit converters in the A/D subsystem **22** and the D/A subsystem **20**, and the use of full scale excursions of high quality transducers consistent with analog test levels.

By employing these several techniques in conjunction with the inventive method for updating the system impedance matrix **44** and for selecting appropriate variable values for the adjustment gain scalar **44** during the test, the inventor has found that the resulting controller **10** provides a significant improvement over prior art vibration control systems.

As discussed herein, the controller **10**, according to the present invention, effectively solves the problem of inaccurate system impedance estimates caused by time variant or non-linear system characteristics. It should be further noted that the present invention provides an additional benefit in that any synergistic effects caused by operating multiple exciters **30** simultaneously, which could not be accounted for using prior art technology, are not missed using the inventive controller **10**, since all measurements are taken under actual operating conditions with all exciters **30** in operation. This last could prove to be one of the more important advances in the field made by the present invention.

As is shown above, in great part, the controllers **10** according to the present invention closely resemble prior art conventional multiexciter swept-sinewave controllers in many respects. The substantial difference exists in the inclusion of means for updating impedance values and the use of a complex variable gain factor for buffering modifications to updated drive signals instead of a constant simple scalar value. No significant changes of materials are envisioned nor are any special constructions required.

Various modifications may be made to the invention without altering its value or scope. For example, various initial values of $c_n$ can be tried to optimize the magnitude of correction made on each repetitive step. Similarly, use of lower or higher quality components or lower or higher resolution digital components than are used in the best presently known embodiment of the invention, as described herein, would not change the basic character of the invention.

Of course, the uniqueness of the invention, as described herein, is not dependent upon use of any particular quantity, type, or configuration of component parts.

Another conceivable change would be to vary the sequence or nomenclature of quantities described by mathematical formula herein, without essentially changing the essence of the described invention.

As mentioned previously, while the best presently know embodiment **10** of the invention has been described herein by means of an example of use wherein an equal number of exciters **30** and sensors **32** are employed, the invention applies equally to "non-square" systems wherein the quantities of exciters **30** differs from the quantity of sensors **32** employed. Such a variation would require considering an impedance matrix to be a N by M dimensional matrix wherein N represents the quantity of exciters **30** and M represents the quantity of sensors **32**, and making corresponding changes within the formulas given herein.

All of the above are only some of the examples of available embodiments of the present invention. Those skilled in the art will readily observe that numerous other modifications and alterations may be made without departing from the spirit and scope of the invention. Accordingly, the above disclosure is not intended as limiting and the appended claims are to be interpreted as encompassing the entire scope of the invention.

INDUSTRIAL APPLICABILITY

The multiexciter swept-sinewave vibration test controllers according to the present invention are particularly adapted for controlling the vibrations applied during vibration testing to structures having less than perfectly stable structural impedance characteristics. The predominant current usages are for testing the structural integrity and resistance to vibration of structures sufficiently large to be subject to significant complex vibration patterns at or near an expected frequency of induced vibration.

The multiexciter swept-sinewave vibration test controllers of the present invention may be utilized in any application wherein conventional multiexciter sine wave controllers are used. The main area of improvement is in the ability of the inventive controller to account for nonlinear and time variant characteristics of the structure under test such that instability and unreliable test results resulting from such nonlinear and time variant characteristics are avoided.

The control system **10** of the present invention affords the additional advantage that it keeps a test structure's response, at the fundamental frequency, relatively constant, and thus minimizes both the effects of externally added noise as well as the contribution of the finite resolution effects of the A/D subsystem **22** and instrumentation effects.

Since the multiexciter digitally sept sine wave vibration test controllers of the present invention may be readily constructed and are physically significantly similar to prior art conventional swept-sinewave controllers, it is expected that they will be acceptable in the industry as substitutes for the conventional controllers. Further, since the controller of the present invention differs substantially from many existing controllers primarily only in that minor modifications cause the inventive controller to function according to the inventive method, it is expected that many existing controllers may be modified to function in accordance with the present inventive method. For these and other reasons, it is expected that the utility and industrial applicability of the invention will be both significant in scope and long-lasting in duration.

## Claims

1. A method for controlling a plurality of analog sinewave drive signals in a multiexciter vibration test, comprising the steps of:

    a. stimulating a system under test (12) with a plurality of exciters (30), each of said exciters (30) being a transducer physically attached to an system under test (12), for converting said analog sinewave drive signals into mechanical motion;

    b. monitoring a response from said system under test (12) using a plurality of sensors, each of said sensors (28, 42) being a transducer physically attached to said system under test (12), for converting said response into an analog response signal;

    c. converting said analog response signal into a first digital signal (34);

    d. modifying said first digital signal (34) as a function of a reference spectrum vector (36) and a measured system response matrix (46), said reference spectrum vector (36) being a digital equivalent of a desired system motion, said measured system response matrix (46) being a digital equivalent of a previously calculated system response, such that an updated digital signal (52) is produced which is a digital equivalent of the analog sinewave drive signals required to cause said first digital signal (34) to approach agreement with the reference spectrum vector (36);

    e. converting said updated digital signal (52) into a yet another plurality of analog sinewave drive signals for again driving said exciters (30); and

    f. continuously repeating steps a. through e. CHARACTERIZED IN that steps a. through e. are repeated while up-dating values of said measured system response matrix (46) as a function of values obtained during previous repetitions, such that a series of said measured system response matrices (46) is produced which are used in the calculation of a series of said updated digital signals (52) for producing a series of said pluralities of said analog sinewave drive signals, such that values for use in calculating a next subsequent of said updated digital signals (52) are being obtained while each of said analog sinewave drive signals is being used to excite the system under test (12).

2. The method of Claim 1, wherein:
steps a. through e. are all accomplished in a less time than a period of said analog sinewave drive signals, such that each succeeding of said analog sinewave drive signals is updated according to its predecessor.

3. The method of Claim 1, and further including:
buffering effects of the measured system response matrix (46) according to a complex number gain value (48) such that, when said first digital signal (34) is modified as a function of the measured system response matrix (46), values of said first digital signal (34) are allowed to approach values of the reference spectrum vector (36) at a rate determined as a function of a confidence value, said confidence value being a function of a difference between an instant set of values of said first digital signal (34) and a previous set of values of said first digital signal (34).

4. The method of Claim 3, wherein:
said complex number gain value (48) is determined as a function of a trial gain value, the reference spectrum vector (36), instant values of said first digital signal (34), and previous values of said first digital signal (34).

5. The method of Claim 4, wherein:
said trial gain value is, itself, a function of the instant values of said first digital signal (34) and the previous values of said first digital signal (34).

6. The method of Claim 1, wherein:
- odd numbered repetitions of the method employ a trial gain value for controlling an amount by which said first digital signal (34) is modified to produce said updated drive signal (52), during which odd numbered repetitions of the method updated values for said first digital signal (34) are obtained by digitizing the resultant analog response signal, and also during which odd numbered repetitions of the method the updated values for said first digital signal (34) are compared to previous values of said first digital signal (34) for determining an updated complex number adjustment scale vector (48); and
- even numbered repetitions of the method employ the just determined updated complex number adjustment scale vector (48) for controlling an amount by which a previous updated digital signal (52) is modified by said first digital signal (34) and the measured system response matrix (46) to produce an instant updated digital signal (52), during which even numbered repetitions of the method the trial gain value is updated to reflect a confidence factor, said confidence factor being a function of the amount by which preceding iterations of said first digital signal (34) have varied.

7. The method of claim 1, wherein:
a system impedance matrix estimate (44) and an adjustment gain scalar value (48) is established; further including the process of employing a feedback control algorithm to account for a plurality of structural cross coupling effects in a system under test (12) by modifying a control error vector (40) according to said system impedance matrix estimate (44), said control error vector (40) being a difference function between an input response vector (34) and a desired response vector and said system impedance matrix estimate (44) being a matrix of values representing said cross coupling effects, whereby an improvement for compensating for nonlinear and time variant characteristics of the system under test (12) includes
a. that the values of said first set of sinewave drive signals having been determined by modifying said control error vector (40) according to a first proportionate part of said system impedance matrix estimate (44), said first proportionate part being the product of said system impedance matrix estimate (44) multiplied by said adjustment gain scalar value (48); and further includes
b. that the resultant input response vector (34) is used to calculate an appropriate value for a variable adjustment gain complex number value (48) and then while stimulating the system under test using the next plurality of analog sinewave drive signals, said next plurality of analog sinewave drive signals having been determined by modifying said control error vector (40) according to a second proportionate part of said system impedance matrix estimate (44), said second proportionate part being the product of said system impedance matrix estimate (44) multiplied by said variable adjustment gain complex number value (48); and

c. repeating steps a. and b. such that during each of alternate repetitions of steps a. and b. a new value for said variable adjustment gain complex number (48) is obtained, and during each of those cycles during which said variable adjustment gain complex number (48) is not being obtained, said variable adjustment gain complex number (48) is being used to determine said second proportionate part of said system impedance matrix estimate (44).

8. The method of Claim 7, wherein:
during alternate repetitions of steps a. and b., the system impedance matrix estimate (44) is updated as a function of the new value of said variable adjustment gain complex number (48).

9. The method of Claim 7, wherein:
during alternate repetitions of steps a. and b., the adjustment gain scalar value (48) is adjusted as a function of a difference between prior values of said control error vector (40).

10. The method of Claim 7, wherein:
a drive matrix, values of said drive matrix being the sets of sinewave drive signal digital equivalents, is updated during each repetition of steps a. and b. by an amount determined by a step value, said step value being the control error vector (40) modified by the system impedance matrix estimate (44) and the adjustment gain scalar value (48); said step value is algebraically summed to a present set of values of said drive matrix to determine a next subsequent set of values of said drive matrix; and
said system impedance matrix estimate (48) is updated on at least alternate repetitions of said steps a. and b. according to measured values of said control error vector (40).

11. The method of Claim 10, wherein:
the adjustment gain vector value (48) is updated during each repetition of steps a. and b. as a function of a difference between two prior values of the control error vector (40).

12. The method of Claim 7, wherein:
said system impedance matrix estimate (44) is the set of inverse values of digitized equivalents of the system response matrix estimate (46), said system response matrix estimate (46) being calculated using data obtained during a previous cycle of steps a. and b.

13. The method of Claim 7, wherein:

said adjustment gain scalar value (48) is a complex number, such that each value within the system impedance matrix estimate (44) will approach a corresponding value of an actual system impedance matrix during each update of the system impedance matrix estimate (44), said actual system impedance matrix being an ideal matrix representing instantaneous response characteristics of the system under test (12).

14. The method of Claim 12, wherein:
values of the adjustment gain scalar (48) are monitored as an indicator of instant reliability of the system impedance matrix estimate (44).

15. A system for inducing controlled vibration patterns in an article under test (12), said system including a plurality of exciters (30) physically attached to the article under test (12) for producing a physical motion in the article under test (12), a plurality of sensors (28, 32) physically attached to the article under test (12) for sensing a resultant motion, an A/D subsystem (22) for converting analog sensor output into a digital output equivalent of sensor output, a digital controller (24) for monitoring digital output from the A/D subsystem (22) and for producing a digital equivalent of a drive signal, and a D/A subsystem (20) for converting said digital equivalent of a drive signal into an analog drive signal for powering the exciters (30), said drive signal being a plurality of sinewaves with each of said sinewaves being modified in phase and amplitude by the digital controller (24) such that said resultant motion tends to conform to a predetermined desired motion, further including a first comparator means (38), logically situated first within said digital controller (24) such that said first comparator means (38) has as one of its inputs the digital output from the A/D subsystem (22), for comparing a control response vector (34) to a reference spectrum vector (36) and for producing a control error vector (40) as an output, said control error vector (40) representing the difference between said control response vector (34) and said reference spectrum vector (36), said control response vector (34) being a digital equivalent of said resultant motion and said reference spectrum vector (36) being a digital equivalent of said predetermined desired motion;
CHARACTERIZED IN a buffering means, logically situated within said digital controller (24) after said first comparator means (38), for modifying a system impedance matrix (44) according to an adjustment gain value (48) and said control error vector (40) and for producing a compensated error matrix (42) as an output, said system impedance matrix (44) containing inverse values of a temporal system response matrix estimate (46), said adjustment gain value (48) being a value representing an amount by which it is desired that said temporal system response matrix estimate (46) should be allowed to affect an overall outcome, and said temporal system response matrix (46) being an estimate of an actual system response matrix, said actual system response matrix representing an ideal measurement of actual system response characteristics which cannot actually be achieved; and a second comparator means (50), logically situated within said digital controller (24) after said buffering means, for comparing a current drive amplitude matrix and said compensated error matrix (42) and for producing an updated drive amplitude matrix (52) as an output, said current drive amplitude matrix (52) being a digital equivalent of the plurality of sinewaves used for powering the exciters (30), which current drive amplitude matrix (52) is returned to said second comparator (50) by means of a feed back loop functioning to return the current drive amplitude matrix (52) to the second comparator (50) such that the current drive amplitude matrix (52) is an input to the second comparator (50) used in producing the updated drive amplitude matrix (52), said compensated error matrix (42) being the output from the buffering means, and said updated drive amplitude matrix (52) serving to replace said current drive amplitude matrix (52) on a next subsequent cycle such that the digital controller (24) produces a continuing series of updated drive amplitude matrices (52).

16. The system of Claim 15, wherein:
said adjustment gain value (48) is a complex number.

17. The system of Claim 15, wherein:
said adjustment gain value (48) is determined during a learning loop, said learning loop being a cycle of operation of the system wherein a learning loop gain value is substituted for said adjustment gain value (48) and wherein system response to drive signal produced during said learning loop is measured and used to calculate an appropriate value for said adjustment gain value (48).

18. The system of Claim 17, wherein:
said learning loop gain value is initially selected to be a real number less than 1.0.

19. The system of Claim 17, wherein:
said learning loop gain value is allowed to approach a value of 1.0 as differences between succeeding of the control response vectors (34) becomes less.

20. The system of Claim 17, wherein:
each of said learning loops is followed by a control loop, said control loop being a cycle of operation of the system wherein said adjustment gain value (48) is used to buffer the system impedance matrix (44) such that the system impedance matrix (44) is updated to approach in value the actual system response matrix; and each of said control loops is followed by a learning loop at least until the system is under control, as indicated by a value of said adjustment gain value (48) near unity.

## Patentansprüche

1. Verfahren zum Regeln einer Vielzahl von analogen sinuswellenförmigen Steuersignalen in einer Mehrfacherregervibrationsprüfung mit den Verfahrensschritten:
a. Anregen eines Prüfsystems (12) mit einer Vielzahl von Erregern (30), wobei jeder der Erreger (30) ein an einem Prüfsystem (12) mechanisch angebrachter Wandler ist, um die analogen sinuswellenförmigen Steuersignale in mechanische Bewegung umzusetzen;
b. Überwachen einer Antwort des Prüfsystems (12) mit Hilfe einer Vielzahl von Meßfühlern, wobei jeder der Meßfühler (28, 42) ein an dem Prüfsystem (12) angebrachter Wandler ist, um die Antwort in ein analoges Antwortsignal umzuwandeln;
c. Umwandeln des analogen Antwortsignals in ein erstes Digitalsignal (34);
d. Abwandeln des ersten Digitalsignals (34) als Funktion eines Sollspektrumvektors (36) und einer Systemmeßantwortmatrix (46), wobei der Sollspektrumvektor (36) ein digitales Äquivalent einer gewünschten Systembewegung ist und wobei die Systemmeßantwortmatrix (46) derart ein digitales Äquivalent einer zuvor berechneten Systemantwort ist, daß ein aktualisiertes Digitalsignal (52) erzeugt wird, welches ein digitales Äquivalent des analogen sinuswellenförmigen Steuersignals ist, das erforderlich ist, um das erste Digitalsignal (34) einer Übereinstimmung mit dem Sollspektrumvektor (36) sich nähern zu lassen;
e. Umwandeln des aktualisierten Digitalsignals (52) in eine weitere Vielzahl von analogen sinuswellenförmigen Steuersignalen, um wiederum die Erreger (30) zu steuern; und
f. fortgesetztes Wiederholen von Verfahrensschritt a. bis e.,
**dadurch gekennzeichnet,** daß die Verfahrens-

schritte a. bis e. wiederholt werden, während Werte der Systemmeßantwortmatrix (46) als eine Funktion der während vorhergehender Wiederholungen erhaltenen Werte so aktualisiert wird, daß eine Reihe von Systemmeßantwortmatrizen (46) erzeugt wird, welche bei der Berechnung einer Reihe der aktualisierten Digitalsignalen (52) verwendet werden, um eine Reihe der Vielzahl von analogen sinuswellenförmigen Steuersignalen so zu erzeugen, daß die zum Berechnen eines nächstfolgenden, aktualisierten Digitalsignals (52) verwendeten Werte, während jedes der analogen sinuswellenförmigen Steuersignale zum Anregen des Prüfsystems (12) verwendet wird, erhalten werden.

2. Verfahren nach Anspruch 1, bei dem:
   alle Verfahrensschritte a. bis e. in weniger Zeit als eine Periode des analogen sinuswellenförmigen Steuersignals so ausgeführt werden, daß jedes der nachfolgenden analogen sinuswellenförmigen Steuersignale gemäß seinem Vorgänger aktualisiert wird.

3. Verfahren nach Anspruch 1 und darüber hinaus mit:
   Pufferung der Systemmeßantwortmatrix (46) gemäß einer komplexen Zahl als Verstärkungswert (48), so daß es beim Umwandeln des ersten Digitalsignals (34) als Funktion der Systemmeßantwortmatrix (46) den Werten des ersten Digitalsignals (34) erlaubt ist, sich den Werten des Sollspektrumvektors (36) mit einer Geschwindigkeit zu nähern, die als eine Funktion eines Konfidenzwertes bestimmt ist, wobei der Konfidenzwert eine Funktion einer Differenz zwischen einem gegenwärtigen Satz von Werten des ersten Digitalsignals (34) und einem früheren Satz von Werten des ersten Digitalsignals (34) ist.

4. Verfahren nach Anspruch 3, bei dem:
   die komplexe Zahl als Verstärkungswert (48) als Funktion eines Versuchsverstärkungswertes, des Sollspektrumvektors (36), der gegenwärtigen Werte des ersten Digitalsignals (34) und von früheren Werten des ersten Digitalsignals (34) bestimmt wird.

5. Verfahren nach Anspruch 4, bei dem:
   der Versuchsverstärkungsfaktor selbst eine Funktion der gegenwärtigen Werte des ersten Digitalsignals (34) und von früheren Werten des ersten Digitalsignals (34) ist.

6. Verfahren nach Anspruch 1, bei dem:
   - ungeradzahlige Wiederholungen des Verfahrens einen Versuchsverstärkungswert gebrauchen, um einen Betrag, um den das erste Digitalsignal (34) zum Erzeugen des aktualisierten Steuersignals (52) abgewandelt wird, zu steuern, wobei während den ungeradzahligen Wiederholungen des Verfahrens aktualisierte Werte für das erste Digitalsignal (34) durch Digitalisieren des sich ergebenden, analogen Antwortsignals erhalten werden, und wobei darüber hinaus während der ungeradzahligen Wiederholungen des Verfahrens die aktualisierten Werte für das erste Digitalsignal (34) mit früheren Werten des ersten Digitalsignals (34) verglichen werden, um einen aktualisierten Berichtigungsskalenvektor (48) mit komplexen Zahlen zu bestimmen; und bei dem:
   - geradzahlige Wiederholungen des Verfahrens den soeben bestimmten, aktualisierten Berichtigungsskalenvektor (48) aus komplexen Zahlen verwenden, um den Betrag zu steuern, um den ein früheres aktualisiertes Digitalsignal (52) durch das erste Digitalsignal (34) und die Systemmeßantwortmatrix (46) zum Erzeugen eines gegenwärtigen aktualisierten Digitalsignals (52) abgewandelt wird, wobei während der geradzahligen Wiederholungen des Verfahrens der Versuchsverstärkungsfaktor aktualisiert wird, um einen Konfidenzfaktor wiederzugeben, wobei der Konfidenzfaktor eine Funktion des Betrages ist, um den vorhergehende Iterationen des ersten Digitalsignals (34) schwankten.

7. Verfahren nach Anspruch 1, bei dem:
   eine geschätzte Systemimpedanzmatrix (44) und ein skalarer Berichtigungsverstärkungswert (48) eingerichtet ist; der ferner den Gebrauch eines Rückkopplungskontrollalgorithmus umfaßt, um eine Vielzahl von strukturellen Kreuzkopplungseffekten in einem Prüfsystem (12) durch Abwandeln eines Regelabweichungsvektors (40) gemäß der geschätzten Systemimpedanzmatrix (44) zu berücksichtigen, wobei der Regelabweichungsvektor (40) eine Differenzfunktion zwischen einem Eingangsantwortvektor (34) und einem gewünschten Antwortvektor ist und wobei die geschätzte Systemimpedanzmatrix (44) eine Matrix mit Werten ist, die die Kreuzkopplungseffekte darstellen, wodurch eine Verbesserung der Kompensation nichtlinearer und zeitveränderlicher Eigenschaften des Prüfsystems (12) einschließt,
   a. daß die Werte des ersten Satzes von sinuswellenförmigen Steuersignalen durch Abwandeln des Regelabweichungsvektors (40) gemäß einem ersten proportionalen Teil der geschätzten Systemimpedanzmatrix (44) bestimmt wurden, wobei der erste proportionale Teil das Produkt der geschätzten Systemimpedanzmatrix (44) multipliziert mit dem skalaren Berichtigungsverstärkungsfaktor (48) ist; und darüber hinaus einschließt,

b. daß der sich ergebende Eingangsantwortvektor (34) zum Berechnen eines geeigneten Wertes für eine veränderliche, komplexe Zahl als Berichtigungsverstärkungswert (48) verwendet wird und daß dann, während das Prüfsystem mit Hilfe der nächsten Vielzahl von analogen sinuswellenförmigen Steuersignalen angeregt wird, diese nächste Vielzahl von analogen sinuswellenförmigen Steuersignalen durch Abwandeln des Regelabweichungsvektors (40) gemäß einem zweiten proportionalen Teil der geschätzten Systemimpedanzmatrix (44), bestimmt wurde, wobei der zweite proportionale Teil das Produkt der geschätzten Systemimpedanzmatrix (44) multipliziert mit der veränderlichen, komplexen Zahl als Berichtigungsverstärkungswert (48) ist; und c. daß die Verfahrensschritte a. und b. so wiederholt werden, daß während jeder der abwechselnden Wiederholungen der Verfahrensschritte a. und b. ein neuer Wert für die veränderliche, komplexe Berichtigungsverstärkungszahl (48) erhalten wird und daß während jeder dieser Zyklen, bei denen die veränderliche, komplexe Berichtigungsverstärkungszahl (48) nicht erhalten wird, die veränderliche, komplexe Berichtigungsverstärkungszahl (48) dazu verwendet wird, um den zweiten proportionalen Teil der geschätzten Systemimpedanzmatrix (44) zu bestimmen.

8. Verfahren nach Anspruch 7, bei dem: während der abwechselnden Wiederholungen der Verfahrensschritte a. und b. die geschätzte Systemimpedanzmatrix (44) als eine Funktion des neuen Wertes der veränderlichen, komplexen Berichtigungsverstärkungszahl (48) aktualisiert wird.

9. Verfahren nach Anspruch 7, bei dem: während der abwechselnden Wiederholungen der Verfahrensschritte a. und b. der skalare Berichtigungsverstärkungswert (48) als Funktion einer Differenz zwischen früheren Werten des Regelabweichungsvektors (40) berichtigt wird.

10. Verfahren nach Anspruch 7, bei dem: eine Steuermatrix, deren Werte die Sätze von digitalen Äquivalenten der sinuswellenförmigen Steuersignale sind, während jeder Wiederholung der Verfahrensschritte a. und b. um einen durch einen Schrittwert bestimmten Betrag aktualisiert wird, wobei der Schrittwert der durch die geschätzte Systemimpedanzmatrix (44) und den skalaren Berichtigungsverstärkungswert (48) abgewandelte Regelabweichungsvektor (40) ist; der Schrittwert algebraisch zu einem gegenwärtigen Satz von Werten der Steuermatrix addiert wird, um einen nächstfolgenden Satz von Werten der Steuermatrix zu bestimmen; und die geschätzte Systemimpedanzmatrix (48) bei zumindest abwechselnden Wiederholungen der Verfahrensschritte a. und b. gemäß Meßwerten des Regelabweichungsvektors (40) aktualisiert wird.

11. Verfahren nach Anspruch 10, bei dem: der Wert des Berichtigungsverstärkungsvektors (48) während jeder Wiederholung der Verfahrensschritte a. und b. als eine Funktion einer Differenz zwischen zwei früheren Werten des Regelabweichungsvektors (40) aktualisiert wird.

12. Verfahren nach Anspruch 7, bei dem: die geschätzte Systemimpedanzmatrix (44) der Satz von invertierten Werten von digitalen Äquivalenten der geschätzten Systemantwortmatrix (46) ist, wobei die geschätzte Systemantwortmatrix (46) mit Hilfe von während eines früheren Zyklus der Verfahrensschritte a. und b. erhaltenen Daten berechnet wird.

13. Verfahren nach Anspruch 7, bei dem: der skalare Berichtigungsverstärkungswert (48) eine komplexe Zahl ist, so daß jeder Wert in der geschätzten Systemimpedanzmatrix (44) sich einem entsprechenden Wert einer tatsächlichen Systemimpedanzmatrix während jeder Aktualisierung der geschätzten Systemimpedanzmatrix (44) nähert, wobei die tatsächliche Systemimpedanzmatrix eine ideale Matrix ist, die gegenwärtige Antworteigenschaften des Prüfsystems (12) darstellt.

14. Verfahren nach Anspruch 12, bei dem: die Werte des Berichtigungsverstärkungsskalars (48) als ein Indikator für die gegenwärtige Verläßlichkeit der geschätzten Systemimpedanzmatrix (44) überwacht werden.

15. System zum Anregen eines geregelten Vibrationsmusters in einem Prüfgegenstand (12) mit einer Vielzahl von an dem Prüfgegenstand (12) mechanisch angebrachten Erregern (30) zum Erzeugen einer mechanischen Bewegung im Prüfgegenstand (12), mit einer Vielzahl von am Prüfgegenstand (12) angebrachten Meßfühlern (28, 32) zur Wahrnehmung der daraus folgenden Bewegung, mit einem A/D-Untersystem (22) zur Umwandlung einer analogen Meßfühlerausgabe in ein digitales Ausgabeäquivalent der Meßfühlerausgabe, mit einer digitalen Kontrolleinrichtung (24) zum Überwachen der digitalen Ausgabe des A/D-Untersystems (22) und zum Erzeugen eines digitalen Äquivalents eines Steuersignals und mit einem D/A-Untersystem (20), um das digitale Äquivalent eines Steuersignals in ein analoges Steuersignal zum Antrieb der Erreger (30) umzuwandeln, wobei das Steuersignal eine Vielzahl von Sinuswellen ist, von denen jede Sinuswelle bezüglich Phase und Amplitude durch die digitale Kontrolleinrichtung (24) so abgewandelt wird, daß die daraus folgende Bewegung dazu neigt, mit einer im voraus bestimmten, gewünschten Bewegung übereinzustimmen, ferner mit einem ersten Komparator (38), der in der Logik an erster Stelle in der digitalen Kontrolleinrichtung (24) so angeordnet ist, daß der erste Komparator (38) als eine seiner Eingaben über die digitale Ausgabe des A/D-Untersystems (22) verfügt, um einen Regelungsantwortvektor (34) mit einem Sollspektrumvektor (36) zu vergleichen und um einen Regelabweichungsvektor (40) als Ausgabe zu erzeugen, wobei der Regelabweichungsvektor (40) dem Unterschied zwischen dem Regelungsantwortvektor (34) und dem Sollspektrumvektor (36) entspricht, wobei der Regelungsantwortvektor (34) ein digitales Äquivalent der sich ergebenden Bewegung ist und wobei der Sollspektrumvektor (36) ein digitales Äquivalent der im voraus bestimmten, gewünschten Bewegung ist;
**gekennzeichnet durch** eine in der Logik in der digitalen Kontrolleinrichtung (24) nach dem ersten Komparator (38) angeordnete Puffereinrichtung, um eine Systemimpedanzmatrix (44) gemäß einem Berichtigungsverstärkungswert (48) und dem Regelabweichungsvektor (40) abzuwandeln und um eine Ausgleichsfehlermatrix (42) als eine Ausgabe zu erzeugen, wobei die Systemimpedanzmatrix (44) invertierte Werte einer temporären geschätzten Systemantwortmatrix (46) enthält, wobei der Berichtigungsverstärkungswert (48) ein Wert ist, der einen Betrag darstellt, um den eine erlaubte Beeinflussung des Gesamtergebnisses durch die temporäre geschätzte Systemantwortmatrix (46) erwünscht ist, und wobei die temporäre Systemantwortmatrix (46) eine Schätzung einer tatsächlichen Systemantwortmatrix ist, wobei die tatsächliche Systemantwortmatrix eine ideale Messung der tatsächlichen Systemantworteigenschaften darstellt, die in Wirklichkeit nicht erreichbar ist; und einen zweiten in der Logik in der digitalen Kontrolleinrichtung (24) nach der Puffereinrichtung angeordneten Komparator (50), um eine aktuelle Steueramplitudenmatrix mit einer Ausgleichsfehlermatrix (42) zu vergleichen und um eine aktualisierte Steueramplitudenmatrix (52) als eine Ausgabe zu erzeugen, wobei die aktuelle Steueramplitudenmatrix (52) ein digitales Äquivalent der Vielzahl der zum Antrieb der Erreger (30) verwendeten Sinuswellen ist und wobei die aktuelle Steueramplitudenmatrix (52) zu dem zweiten Komparator (50) mit Hilfe einer Rückkoppelungsschleife zurückgeführt wird, die dazu dient, die aktuelle Steueramplitudenmatrix (52) zu dem zweiten Komparator (50) so zurückzuführen, daß die aktuelle Steueramplitudenmatrix (52) eine Eingabe für den zum Erzeugen der aktualisierten Steueramplitudenmatrix (52) verwendeten zweiten Komparator (50) ist, wobei die Ausgleichsfehlermatrix (42) die Ausgabe der Puffereinrichtung ist und wobei die aktualisierte Steueramplitudenmatrix (52) dazu dient, die aktuelle Steueramplitudenmatrix (52) in einem nächsten darauffolgenden Zyklus so zu ersetzen, daß die digitale Kontrolleinrichtung (24) eine kontinuierliche Reihe von aktualisierten Steueramplitudenmatrizen (52) erzeugt.

16. System nach Anspruch 15, bei dem:
der Berichtigungsverstärkungswert (48) eine komplexe Zahl ist.

17. System nach Anspruch 15, bei dem:
der Berichtigungsverstärkungswert (48) während einer Lernschleife bestimmt wird, wobei die Lernschleife ein Zyklus von Operationen des Systems ist, bei dem ein Lernschleifenverstärkungswert den Berichtigungsverstärkungswert (48) ersetzt und bei dem eine Systemantwort auf ein während der Lernschleife erzeugtes Steuersignal gemessen und zur Berechnung eines geeigneten Wertes für den Berichtigungsverstärkungswert (48) verwendet wird.

18. System nach Anspruch 17, bei dem:
als Lernschleifenverstärkungswert zunächst eine reale Zahl kleiner als 1,0 gewählt wird.

19. System nach Anspruch 17, bei dem:
es dem Lernschleifenverstärkungswert gestattet ist, sich einem Wert 1,0 zu nähern, während sich die Differenzen zwischen aufeinanderfolgenden Werten des Regelungsantwortvektors (34) verringern.

20. System nach Anspruch 17, bei dem
jede der Lernschleifen von einer Regelschleife gefolgt wird, wobei die Regelschleife ein Zyklus von Operationen des Systems ist, bei dem der Berichtigungsverstärkungswert (48) verwendet wird, um die Systemimpedanzmatrix (44) so zu puffern, daß die Systemimpedanzmatrix (44) zur Annäherung mit Bezug auf den Wert an die tatsächliche Systemantwortmatrix aktualisiert wird; und bei dem jeder der Regelschleifen von einer Lernschleife gefolgt wird, zumindest bis das System unter Kontrolle ist, was durch einen Wert des Berichtigungsverstärkungswertes (48) in der Nähe des Einheitswertes gekennzeichnet ist.

**Revendications**

1. Procédé de commande d'une pluralité de signaux d'activation d'ondes sinusoïdales analogiques dans un test de vibration avec excitateurs multiples, comprenant les étapes de :

(a) stimulation d'un système en essai (12) avec une pluralité d'excitateurs (30), chacun desdits excitateurs (30) étant un transducteur physiquement attaché à un système en essai (12), pour convertir lesdits signaux d'activation d'ondes sinusoïdales analogiques en un mouvement mécanique ;

(b) mesure d'une réponse dudit système en essai (12) au moyen d'une pluralité de détecteurs, chacun desdits détecteurs (28,32) étant un transducteur physiquement attaché audit système en essai (12), pour convertir ladite réponse en un signal de réponse analogique ;

(c) conversion dudit signal de réponse analogique en un premier signal numérique (34) ;

(d) modification dudit premier signal numérique (34) en fonction d'un vecteur de spectre de référence (36) et d'une matrice de réponse de système mesurée (46), ledit vecteur de spectre de référence (36) étant un équivalent numérique d'un mouvement de système désiré, ladite matrice de réponse de système mesurée (46) étant un équivalent numérique d'une réponse de système précédemment calculée, de façon à produire un signal numérique mis à jour (52) qui est un équivalent numérique des signaux d'activation d'ondes sinusoïdales analogiques requis pour que ledit premier signal numérique (34) s'approche de la concordance avec le vecteur de spectre de référence (36) ;

(e) conversion dudit signal numérique mis à jour (52) en encore une autre pluralité de signaux d'activation d'ondes sinusoïdales analogiques, pour une nouvelle activation desdits excitateurs (30) ; et

(f) répétition continue des étapes (a) à (e) ; caractérisé en ce que les étapes (a) à (e) sont répétées pendant la mise à jour des valeurs de ladite matrice de réponse de système mesurée (46) en fonction des valeurs obtenues pendant les répétitions précédentes, de sorte qu'on obtient une série de dites matrices de réponse de système mesurées (46) qui sont utilisées dans le calcul d'une série de dits signaux numériques mis à jour (52) pour produire une série de dites pluralités desdits signaux d'activation d'ondes sinusoïdales analogiques, de façon à obtenir des valeurs à utiliser dans le calcul d'un signal immédiatement suivant desdits signaux numériques mis à jour (52) pendant qu'on utilise chacun desdits signaux d'activation d'ondes sinusoïdales analogiques pour exciter le système en essai (12).

2. Procédé suivant la revendication 1, dans lequel : les étapes (a) à (e) sont toutes effectuées en un temps inférieur à une période desdits signaux d'activation d'ondes sinusoïdales analogiques, de sorte que chaque signal suivant desdits signaux d'activation d'ondes sinusoïdales analogiques est mis à jour en fonction de son prédécesseur.

3. Procédé suivant la revendication 1, comprenant en outre : la mise en tampon des effets de la matrice de réponse de système mesurée (46) en fonction d'une valeur de gain à nombre complexe (48) de sorte que, lorsque le dit premier signal numérique (34) est modifié en fonction de la matrice de réponse de système mesurée (46), les valeurs dudit premier signal numérique (34) peuvent s'approcher des valeurs du vecteur de spectre de référence (36) à une vitesse déterminée en fonction d'une valeur de fiabilité, ladite valeur de fiabilité étant fonction d'une différence entre un ensemble présent de valeurs dudit premier signal numérique (34) et un ensemble précédent de valeurs dudit premier signal numérique (34).

4. Procédé suivant la revendication 3, dans lequel : ladite valeur de gain à nombre complexe (48) est déterminée en fonction d'une valeur de gain d'essai provisoire, du vecteur de spectre de référence (36), des valeurs présentes dudit premier signal numérique (34) et des valeurs précédentes dudit premier signal numérique (34).

5. Procédé suivant la revendication 4, dans lequel : ladite valeur de gain d'essai est elle-même fonction des valeurs présentes dudit premier signal numérique (34) et des valeurs précédentes dudit premier signal numérique (34).

6. Procédé suivant la revendication 1, dans lequel : des répétitions de numéro impair du procédé emploient une valeur de gain d'essai pour fixer une quantité par laquelle ledit premier signal numérique (34) est modifié afin de produire ledit signal d'activation mis à jour (52) et, pendant ces répétitions impaires du procédé, les valeurs mises à jour pour ledit premier signal numérique (34) sont obtenues par numérisation du signal de réponse analogique résultant, et également pendant ces répétitions impaires du procédé, les valeurs mises à jour dudit premier signal numérique (34) sont comparées aux valeurs précédentes dudit premier signal numérique (34) pour déterminer une valeur scalaire d'ajustement de nombre complexe mise à jour (48) ; et

des répétitions de numéro pair du procédé emploient la valeur scalaire d'ajustement de nombre complexe mise à jour juste déterminée(48) pour fixer une quantité par laquelle un signal numérique mis à jour précédent (52) est modifié par ledit premier signal numérique (34) et par la matrice de réponse de système mesurée (46) pour produire un signal numérique mis à jour présent (52) et, pendant ces répétitions paires du procédé, la valeur de gain d'essai est mise à jour pour refléter un facteur de confiance ou de fiabilité; ledit facteur de confiance étant fonction de la quantité dont les itérations précédentes dudit premier signal numérique (34) ont varié.

7.  Procédé suivant la revendication 1, dans lequel on établit une estimation de matrice d'impédance de système (44) et une valeur scalaire de gain d'ajustement (48) ;

comprenant en outre l'emploi d'un algorithme de commande de réaction pour tenir compte d'une pluralité d'effets de couplage croisé structurel dans un système en essai (12) par modification d'un vecteur d'erreur de commande (40) conformément à ladite estimation de matrice d'impédance de système (44), ledit vecteur d'erreur de commande (40) étant fonction d'une différence entre un vecteur de réponse d'entrée (34) et un vecteur de réponse désiré, et ladite estimation de matrice d'impédance de système (44) étant une matrice de valeurs représentant lesdits effets de couplage croisé, de sorte qu'un perfectionnement pour compenser les caractéristiques non linéaires et variant dans le temps du système en essai (12) consiste en ce que :

(a) les valeurs dudit premier ensemble de signaux d'activation d'ondes sinusoïdales ont été déterminées par modification dudit vecteur d'erreur de commande (40) conformément à une première partie proportionnelle de ladite estimation de matrice d'impédance de système (44), ladite première partie proportionnelle étant le produit de ladite estimation de matrice d'impédance de système (44) multipliée par ladite valeur scalaire de gain d'ajustement (48) ;

(b) le vecteur de réponse d'entrée résultant (34) est utilisé pour calculer une valeur appropriée pour une valeur de nombre complexe du gain d'ajustement variable (48) puis, pendant la stimulation du système en essai, on utilise la pluralité suivante de signaux d'activation d'ondes sinusoïdales analogiques, ladite pluralité suivante de signaux d'activation d'ondes sinusoïdales analogiques ayant été déterminée par modification dudit vecteur d'erreur de commande (40) conformément à une deuxième partie proportionnelle de ladite estimation de matrice d'impédance de système (44), ladite deuxième partie proportionnelle étant le produit de ladite estimation de matrice d'impédance de système (44) multipliée par ladite valeur de nombre complexe du gain d'ajustement variable (48) ; et

(c) on répète les étapes (a) et (b) de façon à obtenir, pendant chacune des répétitions alternées des étapes (a) et (b), une nouvelle valeur dudit nombre complexe de gain d'ajustement variable (48), et, pendant chacun des cycles pendant lesquels ledit nombre complexe de gain d'ajustement variable (48) n'est pas obtenu, on utilise ledit nombre complexe de gain d'ajustement variable (48) pour déterminer ladite deuxième partie proportionnelle de ladite estimation de matrice d'impédance de système (44).

8.  Procédé suivant la revendication 7, dans lequel :
pendant les répétitions alternées des étapes (a) et (b), l'estimation de matrice d'impédance de système (44) est mise à jour en fonction de la nouvelle valeur du dit nombre complexe de gain d'ajustement variable (48).

9.  Procédé suivant la revendication 7, dans lequel :
pendant les répétitions alternées des étapes (a) et (b), la valeur scalaire du gain d'ajustement (48) est ajustée en fonction d'une différence entre les valeurs antérieures dudit vecteur d'erreur de commande (40).

10.  Procédé suivant la revendication 7, dans lequel :
une matrice d'activation, les valeurs de la dite matrice d'activation étant les ensembles d'équivalents numériques des signaux d'activation d'ondes sinusoïdales, est mise à jour pendant chaque répétition des étapes (a) et (b), d'une quantité déterminée par une valeur de pas, ladite valeur de pas étant le vecteur d'erreur de commande (40) modifié par l'estimation de matrice d'impédance de système (44) et la valeur scalaire de gain d'ajustement (48) ;

ladite valeur de pas est ajoutée algébriquement à un ensemble présent de valeurs de ladite matrice d'activation, pour déterminer un ensemble immédiatement suivant de valeurs de ladite matrice d'activation ; et

ladite estimation de matrice d'impédance de système (48) est mise à jour, sur au moins des répétitions alternées desdites étapes (a) et (b), en fonction des valeurs mesurées dudit vecteur d'erreur de commande (40).

11. Procédé suivant la revendication 10, dans lequel :

la valeur de vecteur de gain d'ajustement (48) est mise à jour pendant chaque répétition des étapes (a) et (b) en fonction d'une différence entre deux valeurs antérieures du vecteur d'erreur de commande (40).

12. Procédé suivant la revendication 7, dans lequel :

ladite estimation de matrice d'impédance de système (44) est l'ensemble des valeurs inverses des équivalents numérisés de l'estimation de matrice de réponse de système (46), ladite estimation de matrice de réponse de système (46) étant calculée au moyen de données obtenues pendant un cycle précédent des étapes (a) et (b).

13. Procédé suivant la revendication 7, dans lequel :

ladite valeur scalaire de gain d'ajustement (48) est un nombre complexe, de sorte que chaque valeur à l'intérieur de l'estimation de matrice d'impédance de système (44) s'approche d'une valeur correspondante d'une matrice d'impédance de système réelle pendant chaque mise à jour de l'estimation de matrice d'impédance de système (44), ladite matrice d'impédance de système réelle étant une matrice idéale qui représente les caractéristiques de réponse instantanées du système en essai (12).

14. Procédé suivant la revendication 12, dans lequel :

les valeurs du coefficient scalaire de gain d'ajustement (48) sont surveillées pour servir d'indicateur de la fiabilité présente de l'estimation de matrice d'impédance de système (44).

15. Système pour induire des configurations de vibrations commandées dans un élément en essai (12), ledit système comprenant une pluralité d'excitateurs (30) physiquement attachés à l'élément en essai (12) pour produire un mouvement physique dans l'élément en essai (12), une pluralité de détecteurs (28,32) physiquement attachés à l'élément en essai (12) pour détecter un mouvement résultant, un sous-système A/N (22) pour convertir la sortie de détecteur analogique en un équivalent numérique de sortie de détecteur, une unité de commande numérique (24) pour surveiller la sortie numérique du sous-sytème A/N (22) et pour produire un équivalent numérique d'un signal d'activation et un sous-système N/A (20) pour convertir ledit équivalent numérique d'un signal d'activation en un signal d'activation analogique pour l'alimentation des excitateurs (30), ledit signal d'activation étant une pluralité d'ondes sinusoïdales et chacune desdites ondes sinusoïdales étant modifiée en phase et en amplitude par l'unité de commande numérique (24) d'une manière telle que ledit mouvement résultant tend à se conformer à un mouvement désiré prédéterminé, et comprenant en outre un premier comparateur (38), situé logiquement en premier dans la dite unité de commande numérique (24) de sorte que ledit premier comparateur (38) reçoit à une de ses entrées la sortie numérique du sous-système A/N (22), pour comparer un vecteur de réponse de commande (34) à un vecteur de spectre de référence (36) et pour produire un vecteur d'erreur de commande (40) comme sortie, ledit vecteur d'erreur de commande (40) représentant la différence entre le dit vecteur de réponse de commande (34) et ledit vecteur de spectre de référence (36), ledit vecteur de réponse de commande (34) étant un équivalent numérique dudit mouvement résultant et ledit vecteur de spectre de référence (36) étant un équivalent numérique dudit mouvement désiré prédéterminé ; caractérisé en ce qu'il comprend des moyens de mise en tampon, situés logiquement à l'intérieur de ladite unité de commande numérique (24) après ledit premier comparateur (38), pour modifier une matrice d'impédance (44) conformément à une valeur de gain d'ajustement (48) et au dit vecteur d'erreur de commande (40) et pour produire une matrice à erreur compensée (42) comme sortie, ladite matrice d'impédance de système (44) contenant des valeurs inverses d'une estimation de matrice de réponse de système temporelle (46), ladite valeur de gain d'ajustement (48) étant une valeur qui représente une quantité par laquelle on désire que ladite estimation de matrice de réponse de système temporelle (46) puisse affecter une sortie globale, et ladite matrice de réponse de système temporelle (46) étant une estimation d'une matrice de réponse de système réelle, ladite matrice de réponse de système réelle représentant une mesure idéale des caractéristiques de réponse de système réelles qu'on ne peut pas obtenir effectivement ; et un deuxième comparateur (50), situé logiquement à l'intérieur de ladite unité de commande numérique (24) après lesdits moyens de mise en tampon, pour comparer une matrice d'amplitude d'activation présente et ladite matrice à erreur compensée (42) et pour produire une matrice d'amplitude d'activation mise à jour (52) comme sortie, ladite matrice d'amplitude d'activation présente (52) étant un équivalent numérique de la pluralité d'ondes sinusoïdales utilisées pour alimenter les excitateurs (30), cette matrice d'amplitude d'activation présente (52) étant renvoyée audit deuxième comparateur (50) par une boucle de réaction fonctionnant pour renvoyer la matrice d'amplitude d'activation présente (52) au deuxième comparateur (50) d'une manière telle que la matrice d'amplitude d'activation présente (52) constitue une entrée au deuxième comparateur (50) utilisée pour produire la matrice d'amplitude d'activation mise à jour (52), ladite matrice à erreur compensée (42) étant la sortie des moyens de mise en tampon, et ladite matrice d'amplitude d'activation mise à jour (52) servant à remplacer ladite matrice d'amplitude d'activation présente (52) lors d'un cycle immédiatement suivant, de sorte que l'unité de commande numérique (24) produit une série continue de matrices d'amplitude d'activation mises à jour (52).

16. Système suivant la revendication 15, dans lequel :
    ladite valeur de gain d'ajustement (48) est un nombre complexe.

17. Système suivant la revendication 15, dans lequel :
    ladite valeur de gain d'ajustement (48) est déterminée pendant une boucle de préparation, ladite boucle de préparation étant un cycle de fonctionnement du système dans lequel une valeur de gain de boucle de préparation remplace ladite valeur de gain d'ajustement (48), et la réponse du système au signal d'activation, produite pendant ladite boucle de préparation, est mesurée et utilisée pour calculer une valeur appropriée de ladite valeur de gain d'ajustement (48).

18. Système suivant la revendication 17, dans lequel :
    ladite valeur de gain de boucle de préparation est initialement choisie comme étant un nombre réel inférieur à 1,0.

19. Système suivant la revendication 17, dans lequel :
    ladite valeur de gain de boucle de préparation peut s' approcher d'une valeur de 1,0 au fur et à mesure que la différence entre des vecteurs successifs des vecteurs de réponse de commande (34) diminue.

20. Système suivant la revendication 17, dans lequel :
    chacune des dites boucles de préparation est suivie d'une boucle de commande, ladite boucle de commande étant un cycle de fonctionnement du système dans lequel ladite valeur de gain d'ajustement (48) est utilisée pour la mise en tampon de la matrice d'impédance de système (44) de sorte que la matrice d'impédance de système (44) est corrigée pour s'approcher en valeur de la matrice de réponse de système réelle ; et chacune desdites boucles de commande est suivie d'une boucle de préparation au moins jusqu'à ce que le système soit sous contrôle, comme indiqué par une valeur de ladite valeur de gain d'ajustement (48) proche de l'unité.

FIG. 1

FIG. 2